# EUROPEAN PATENT APPLICATION

(11) **EP 4 848 673 A1**
(43) Date of publication of application: **02.12.2026**
(21) Application number: 25751052.9
(22) Date of filing: 08.01.2025
(51) Int. Cl.: H04L 27/00

(54) **FREQUENCY OFFSET COMPENSATION METHOD, APPARATUS AND SYSTEM**

(30) Priority: 08.02.2024 CN 202410178266
(71) Applicant: Huawei Technologies Co., Ltd., Shenzhen, Guangdong 518129 (CN)
(72) Inventor: WU, Yiling, Shenzhen, Guangdong 518129 (CN); ZHANG, Jing, Shenzhen, Guangdong 518129 (CN)
(74) Representative: Huawei European IPR
(86) International application number: PCT/CN2025/071339
(87) International publication number: WO 2025/167450

(57) **Abstract**

Embodiments of this application provide a frequency offset compensation method, an apparatus, and a system to improve accuracy of frequency offset compensation performed by a terminal device. The method includes: receiving first indication information, where the first indication information indicates a first frequency, the first frequency is used for frequency offset compensation of an uplink signal, and the first frequency is a center frequency of a first downlink signal; and sending the uplink signal at a frequency obtained through the frequency offset compensation.

## Description

This application claims priority to Chinese Patent Application No. 202410178266.9, filed with the China National Intellectual Property Administration on February 8, 2024 and entitled "FREQUENCY OFFSET COMPENSATION METHOD, APPARATUS, AND SYSTEM", which is incorporated herein by reference in its entirety.

### TECHNICAL FIELD

This application relates to the field of communication technologies, and in particular, to a frequency offset compensation method, an apparatus, and a system.

### BACKGROUND

Ambient (ambient) internet of things (Internet of things, IOT) supports battery-free operation of tags. In ambient internet of things communication, terminal devices may be referred to as tags. Tags include active (active) tags that can independently generate carriers. However, because the active tags use ultra-low-power local oscillators, the frequency of a generated carrier has a carrier frequency offset (carrier frequency offset, CFO) relative to a reference carrier frequency. A typical CFO value may range from 100-200 parts per million (parts per million, ppm). When the reference carrier frequency is 900 megahertz (MHz), the CFO may be converted into an absolute value, that is, 90 kilohertz (kHz) to 180 kHz.

Generally, after the terminal device receives a downlink reference frequency signal (referred to as a "downlink signal" for short below) from a network device, if the CFO is large, for example, greater than half of a value of a channel raster, the terminal device cannot correctly determine the center frequency of the downlink signal, resulting in incorrect estimation of the CFO. After the terminal device compensates for the incorrect CFO, the CFO obtained through compensation is even larger. Consequently, when the terminal device subsequently transmits an uplink signal based on the CFO obtained through compensation, demodulation of the uplink signal is affected.

### SUMMARY

Embodiments of this application provide a frequency offset compensation method, an apparatus, and a system to improve accuracy of frequency offset compensation performed by a terminal device.

To achieve the foregoing objective, the following technical solutions are used in embodiments of this application.

According to a first aspect, a frequency offset compensation method is provided. An apparatus for performing the frequency offset compensation method may be a terminal device, or may be a module used in a terminal device, for example, a chip or a chip system. For example, the frequency offset compensation method is performed by a terminal device. The frequency offset compensation method includes: receiving first indication information, where the first indication information indicates a first frequency, the first frequency is used for frequency offset compensation of an uplink signal, and the first frequency is a center frequency of a first downlink signal; and sending the uplink signal at a frequency obtained through the frequency offset compensation.

In the frequency offset compensation method according to this embodiment of this application, the terminal device may obtain the center frequency of the first downlink signal, and perform frequency offset compensation based on the center frequency of the first downlink signal. This can avoid an error caused by the terminal device independently determining the center frequency of the first downlink signal, thereby improving accuracy of frequency offset compensation performed by the terminal device.

With reference to the first aspect, in a possible implementation, the method further includes: determining a first value based on the first indication information, where the first value is a frequency value corresponding to the first frequency; and determining a frequency offset value, where the frequency offset value is used for frequency offset compensation, the frequency offset value is a difference between the first value and a second value, and the second value is a frequency value of a center frequency of the first downlink signal detected by the terminal device. In this solution, the first value may be a frequency value corresponding to the first frequency on a frequency axis of the terminal device. For example, if the first frequency is 934 M (on a frequency axis), the first value may be 934 M on the frequency axis of the terminal device. In other words, the frequency value of the first frequency and the first value are numerically the same, but are located at different positions on the frequency axis of the terminal device or on the frequency axis.

With reference to the first aspect, in a possible implementation, the first frequency belongs to a first frequency set, the first frequency set includes N frequencies, and an absolute value of a frequency difference between adjacent frequencies among the N frequencies is a value of a channel raster. In this solution, N may be a positive integer greater than 1.

With reference to the first aspect, in a possible implementation, N is associated with a maximum allowable frequency offset value and the value of a channel raster. In this solution, because the maximum allowable frequency offset value is finite, a value of N is also finite and small and is usually a one-digit number. Therefore, a number of the first frequency may occupy fewer bits.

With reference to the first aspect, in a possible implementation, N satisfies the following relationship: $N = \left\{\begin{matrix}\left⌈2y/x\right⌉ & if \left⌈2x/y\right⌉ % 2 \neq 0 \\ \left⌈2y/x\right⌉ + 1 & if \left⌈2x/y\right⌉ % 2 = 0\end{matrix}\right. ,$ where
y represents the maximum allowable frequency offset value, x represents the value of a channel raster, ┌ ┐ represents rounding up, and % represents a remainder operation.

With reference to the first aspect, in a possible implementation, the value of N is 5. For example, when x=100 kHz, and y=180 kHz, $\left⌈2x/y\right⌉ % 2 = 0$, and N= [2y/x]+1=5.

With reference to the first aspect, in a possible implementation, the N frequencies are located in an operating band. In this solution, a value of N may be a quantity of frequencies in the operating band. The value of N is finite and is usually a three-digit number. Therefore, compared with a solution in which an EARFCN is directly used to represent a number of the first frequency, a number of the first frequency in this solution may occupy fewer bits.

With reference to the first aspect, in a possible implementation, the first indication information is carried in broadcast information. In this solution, similar to a cell identity (identity, ID), content included in the first indication information is usually consistent for terminal devices in a same cell. Therefore, the network device may deliver the first indication information in a broadcast manner. In this solution, sending of the first indication information for a plurality of times can be avoided, which helps reduce an overall transmission delay of the first indication information and alleviates network load, thereby lowering a probability of network congestion.

According to a second aspect, a frequency offset compensation method is provided. An apparatus for performing the frequency offset compensation method may be a network device, or may be a module used in a network device, for example, a chip or a chip system. For example, the frequency offset compensation method is performed by a network device. The frequency offset compensation method includes: sending first indication information, where the first indication information indicates a first frequency, the first frequency is used for frequency offset compensation of an uplink signal, and the first frequency is a center frequency of a first downlink signal; and receiving the uplink signal, where the uplink signal is sent at a frequency obtained through the frequency offset compensation.

With reference to the second aspect, in a possible implementation, the first frequency belongs to a first frequency set, the first frequency set includes N frequencies, and an absolute value of a frequency difference between adjacent frequencies among the N frequencies is a value of a channel raster.

With reference to the second aspect, in a possible implementation, N is associated with a maximum allowable frequency offset value and the value of a channel raster.

With reference to the second aspect, in a possible implementation, N satisfies the following relationship: $N = \left\{\begin{matrix}\left⌈2y/x\right⌉ & if \left⌈2x/y\right⌉ % 2 \neq 0 \\ \left⌈2y/x\right⌉ + 1 & if \left⌈2x/y\right⌉ % 2 = 0\end{matrix}\right. ,$ where
y represents the maximum allowable frequency offset value, x represents the value of a channel raster, ┌ ┐ represents rounding up, and % represents a remainder operation.

With reference to the second aspect, in a possible implementation, a value of N is 5.

With reference to the second aspect, in a possible implementation, the N frequencies are located in an operating band.

With reference to the second aspect, in a possible implementation, the first indication information is carried in broadcast information.

According to a third aspect, a communication apparatus is provided to implement the foregoing method. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the third aspect, in a possible implementation, the communication apparatus includes a receiving module and a sending module. The receiving module is configured to receive first indication information, where the first indication information indicates a first frequency, the first frequency is used for frequency offset compensation of an uplink signal, and the first frequency is a center frequency of a first downlink signal. The sending module is configured to send the uplink signal at a frequency obtained through the frequency offset compensation.

With reference to the third aspect, in a possible implementation, the communication apparatus further includes a determining module. The determining module is configured to determine a first value based on the first indication information, where the first value is a frequency value corresponding to the first frequency. The determining module is further configured to determine a frequency offset value, where the frequency offset value is used for frequency offset compensation, the frequency offset value is a difference between the first value and a second value, and the second value is a frequency value of a center frequency of the first downlink signal detected by the communication apparatus.

With reference to the third aspect, in a possible implementation, the first frequency belongs to a first frequency set, the first frequency set includes N frequencies, and an absolute value of a frequency difference between adjacent frequencies among the N frequencies is a value of a channel raster.

With reference to the third aspect, in a possible implementation, N is associated with a maximum allowable frequency offset value and the value of a channel raster.

With reference to the third aspect, in a possible implementation, N satisfies the following relationship: $N = \left\{\begin{matrix}\left⌈2y/x\right⌉ & if \left⌈2x/y\right⌉ % 2 \neq 0 \\ \left⌈2y/x\right⌉ + 1 & if \left⌈2x/y\right⌉ % 2 = 0\end{matrix}\right. ,$ where
y represents the maximum allowable frequency offset value, x represents the value of a channel raster, ┌ ┐ represents rounding up, and % represents a remainder operation.

With reference to the third aspect, in a possible implementation, a value of N is 5.

With reference to the third aspect, in a possible implementation, the N frequencies are located in an operating band.

With reference to the third aspect, in a possible implementation, the first indication information is carried in broadcast information.

According to a fourth aspect, a communication apparatus is provided to implement the foregoing method. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the fourth aspect, in a possible implementation, the communication apparatus includes a sending module and a receiving module. The sending module is configured to send first indication information, where the first indication information indicates a first frequency, the first frequency is used for frequency offset compensation of an uplink signal, and the first frequency is a center frequency of a first downlink signal. The receiving module is configured to receive the uplink signal, where the uplink signal is sent at a frequency obtained through the frequency offset compensation.

With reference to the fourth aspect, in a possible implementation, the first frequency belongs to a first frequency set, the first frequency set includes N frequencies, and an absolute value of a frequency difference between adjacent frequencies among the N frequencies is a value of a channel raster.

With reference to the fourth aspect, in a possible implementation, N is associated with a maximum allowable frequency offset value and the value of a channel raster.

With reference to the fourth aspect, in a possible implementation, N satisfies the following relationship: $N = \left\{\begin{matrix}\left⌈2y/x\right⌉ & if \left⌈2x/y\right⌉ % 2 \neq 0 \\ \left⌈2y/x\right⌉ + 1 & if \left⌈2x/y\right⌉ % 2 = 0\end{matrix}\right. ,$ where
y represents the maximum allowable frequency offset value, x represents the value of a channel raster, ┌ ┐ represents rounding up, and % represents a remainder operation.

With reference to the fourth aspect, in a possible implementation, a value of N is 5.

With reference to the fourth aspect, in a possible implementation, the N frequencies are located in an operating band.

With reference to the fourth aspect, in a possible implementation, the first indication information is carried in broadcast information.

According to a fifth aspect, a communication apparatus including a processor is provided. The processor is configured to: after being coupled to a memory and reading computer instructions stored in the memory, perform, according to the instructions, the method according to the first aspect or the second aspect.

With reference to the fifth aspect, in a possible implementation, the communication apparatus further includes a memory, and the memory is configured to store the computer instructions.

With reference to the fifth aspect, in a possible implementation, the communication apparatus further includes a communication interface. The communication interface is used by the communication apparatus to communicate with another device. For example, the communication interface may be a transceiver, an input/output interface, an interface circuit, an output circuit, an input circuit, a pin, or a related circuit.

With reference to the fifth aspect, in a possible implementation, the communication apparatus may be a chip or a chip system. When the communication apparatus is a chip system, the communication apparatus may include a chip, or may include a chip and another discrete device.

With reference to the fifth aspect, in a possible implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a sixth aspect, a communication system is provided, including the terminal device that performs the method according to the first aspect and the network device that performs the method according to the second aspect.

According to a seventh aspect, a computer-readable storage medium is provided. The computer-readable storage medium stores instructions. When the instructions are run on a computer, the computer is enabled to perform the method according to the first aspect or the second aspect.

According to an eighth aspect, a computer program product including instructions is provided. When the computer program product runs on a computer, the computer is enabled to perform the method according to the first aspect or the second aspect.

According to a ninth aspect, a chip including a processor is provided. The processor is configured to run instructions, to enable an apparatus including the chip to perform the method according to the first aspect or the second aspect.

With reference to the ninth aspect, in a possible implementation, the chip further includes a memory, and the memory is configured to store instructions.

For technical effects brought by any one of the possible implementations of the second aspect to the ninth aspect, refer to the technical effects brought by the first aspect or different implementations of the first aspect. Details are not described herein again.

### BRIEF DESCRIPTION OF DRAWINGS

FIG. 1 is a diagram in which a current terminal device determines a center frequency of a downlink signal;
FIG. 2 is a diagram of CFO estimation by a current terminal device;
FIG. 3 is a diagram of impact of frequency offset compensation performed by a current terminal device on an uplink signal;
FIG. 4 is a diagram of an architecture of a communication system according to an embodiment of this application;
FIG. 5 is a diagram 1 of a structure of a communication apparatus according to an embodiment of this application;
FIG. 6 is a flowchart of a frequency offset compensation method according to an embodiment of this application;
FIG. 7 is a diagram in which a terminal device determines an EARFCN corresponding to a center frequency of a first downlink signal when an absolute value of a frequency offset value is less than 100 kHz according to an embodiment of this application;
FIG. 8 is a diagram in which a terminal device determines an EARFCN corresponding to a center frequency of a first downlink signal when an absolute value of a frequency offset value is greater than or equal to 100 kHz according to an embodiment of this application;
FIG. 9 is a diagram in which a terminal device determines a frequency offset value according to an embodiment of this application;
FIG. 10 is a diagram of impact of frequency offset compensation performed by a terminal device on an uplink signal according to an embodiment of this application; and
FIG. 11 is a diagram 2 of a structure of a communication apparatus according to an embodiment of this application.

### DESCRIPTION OF EMBODIMENTS

For ease of understanding the technical solutions in embodiments of this application, the following first briefly describes technologies or terms related to this application.

### 1. Channel raster and evolved universal terrestrial radio access absolute radio frequency channel number (evolved universal terrestrial radio access absolute radio frequency channel number, E-UTRA absolute radio frequency channel number, EARFCN)

A channel raster may be understood as a frequency range whose endpoints are two adjacent carrier frequencies among a plurality of possible carrier frequencies. Correspondingly, a value of a channel raster may be understood as a spacing between two adjacent carrier frequencies among a plurality of possible carrier frequencies. For example, in a long term evolution (long term evolution, LTE) system, the value of a channel raster is specified as 100 kHz. In ambient IoT, the value of a channel raster may be an integer multiple of 100 kHz.

Generally, an EARFCN is used to identify a carrier frequency. Further, in existing protocols, a mapping relationship between an EARFCN and a carrier frequency expressed in MHz may be defined by a formula or a table. A value of the EARFCN may range from 0 to 262143. An LTE system is used as an example. Because the value of a channel raster is 100 kHz, a carrier frequency is usually an integer multiple of 100 kHz.

### 2. Conventional frequency offset compensation method

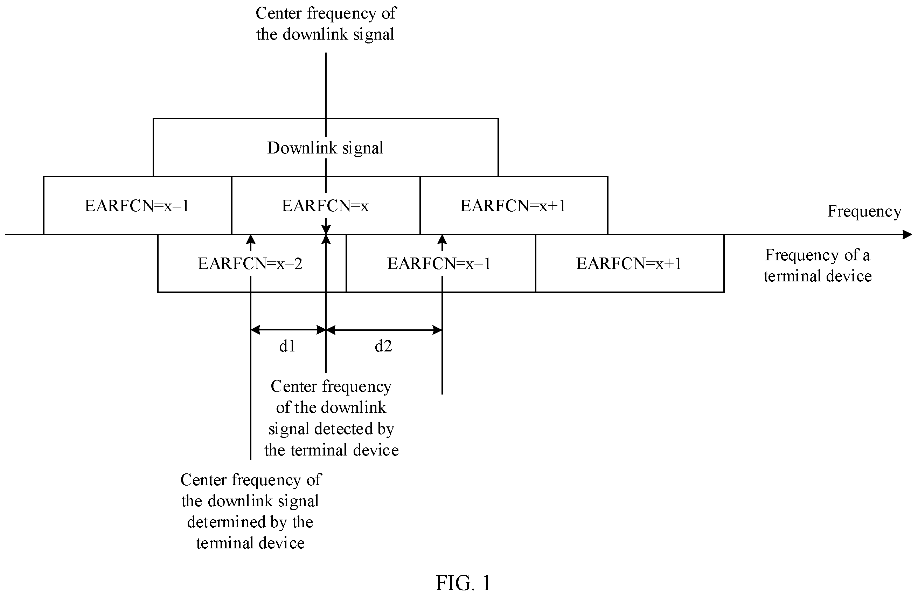

FIG. 1 is a diagram in which a terminal device determines a center frequency of a downlink signal. As shown in FIG. 1, a CFO causes an offset between a frequency axis and a frequency axis of the terminal device. The frequency axis may be understood as a frequency axis of a network device or a reference frequency axis.

It is assumed that the center frequency of a downlink signal is a center frequency of a channel raster corresponding to EARFCN=x on the frequency axis. After the terminal device receives a downlink signal, because the center frequency of a downlink signal is usually located at the center of a channel raster, the terminal device determines the center frequency of the downlink signal as a center frequency of a channel raster that is on the frequency axis of the terminal device and that is closest to a detected center frequency of the downlink signal. Specifically, a distance between a center frequency of a channel raster corresponding to EARFCN=x-2 and the detected center frequency of the downlink signal is d1, a distance between a center frequency of a channel raster corresponding to EARFCN=x-1 and the detected center frequency of the downlink signal is d2, and d1<d2. In this case, the terminal device determines the center frequency of the downlink signal as the center frequency of the channel raster corresponding to EARFCN=x-2 on the frequency axis of the terminal device. Clearly, x is not equal to x-2, and therefore the center frequency of the downlink signal determined by the terminal device is incorrect.

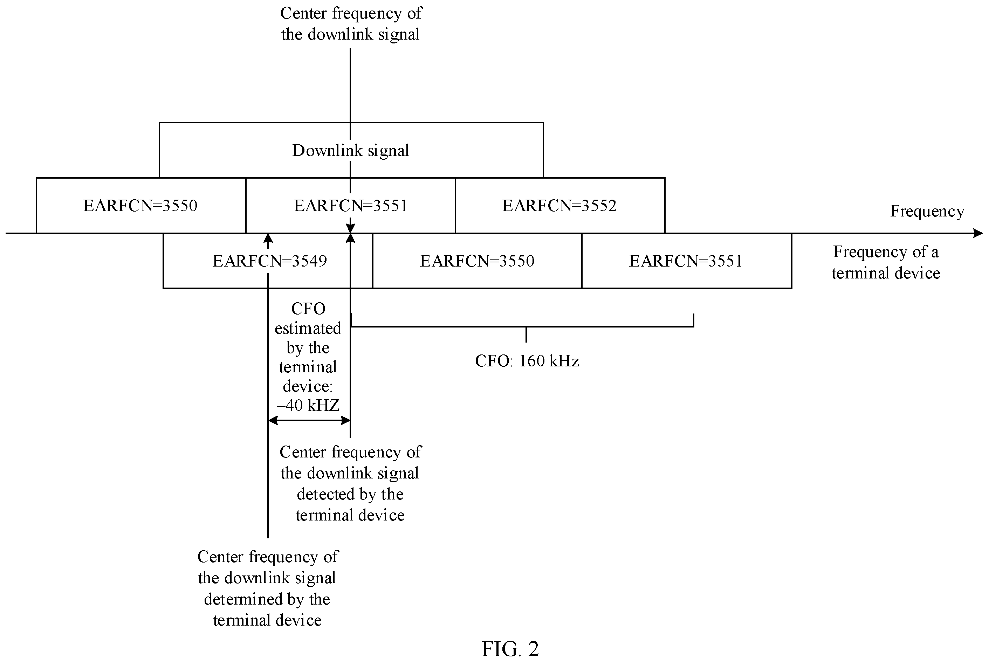

Further, with reference to FIG. 1, an example in which a value of x is 3551 is used. FIG. 2 is a diagram of CFO estimation by the terminal device. In FIG. 2, a difference between a frequency value of a center frequency of a channel raster corresponding to EARFCN=3551 on the frequency axis of the terminal device and a frequency value of a center frequency of a channel raster corresponding to EARFCN=3551 on the frequency axis is 160 kHz. In other words, the actual CFO is 160 kHz. Because the terminal device determines the center frequency of the downlink signal as a center frequency of a channel raster corresponding to EARFCN=3549 on the frequency axis of the terminal device, the terminal device subtracts a frequency value of the detected center frequency of the downlink signal from a frequency value of the center frequency of the channel raster corresponding to EARFCN=3549 on the frequency axis of the terminal device, to obtain an estimated CFO, which is specifically -40 kHz. Clearly, -40 kHz is not equal to 160 kHz, and therefore CFO estimation by the terminal device is incorrect.

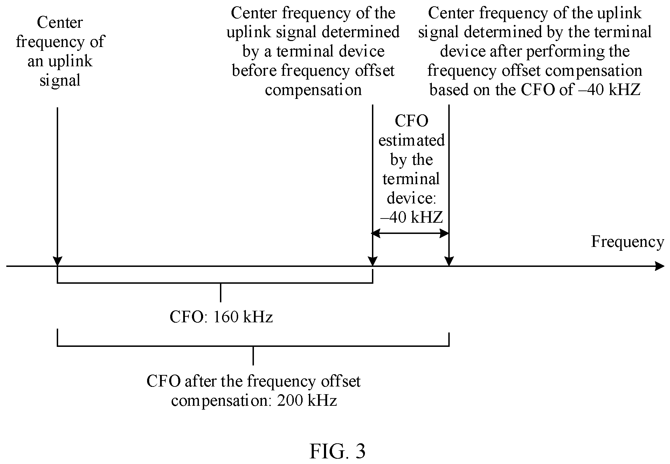

Further, with reference to FIG. 2, FIG. 3 is a diagram of impact of frequency offset compensation performed by a terminal device on an uplink signal. A difference between a frequency value of a center frequency of an uplink signal on the frequency axis of the terminal device and a frequency value of a center frequency of an uplink signal on the frequency axis is the same as a difference between a frequency value of a center frequency of a downlink signal on the frequency axis of the terminal device and a frequency value of a center frequency of a downlink signal on the frequency axis. In other words, a CFO present when the terminal device sends an uplink signal is the same as a CFO present when the terminal device receives a downlink signal. Because the CFO is 160 kHz, on the frequency axis, a difference between a frequency value of the center frequency of the uplink signal determined by the terminal device before frequency offset compensation and a frequency value of the center frequency of the uplink signal is 160 kHz. The terminal device performs the frequency offset compensation based on the CFO of -40 kHz. To be specific, the terminal device shifts the frequency axis of the terminal device rightward by 40 kHz, or the terminal device adds 40 kHz to the frequency value of each frequency. Then, a difference between a frequency value of the center frequency of the uplink signal determined by the terminal device after the frequency offset compensation and a frequency value of the center frequency of the uplink signal before the frequency offset compensation is 40 kHz. Consequently, a CFO obtained through compensation is not eliminated, but instead increases to 200 kHz, causing more severe impact on demodulation of the uplink signal.

To prevent incorrect estimation of the CFO by the terminal device and therefore improve accuracy of frequency offset compensation by the terminal device, in embodiments of this application, the network device may send the center frequency of the downlink signal to the terminal device, and the terminal device does not need to independently determine the center frequency of the downlink signal.

Unless otherwise specified, the "center frequency of the downlink signal" in embodiments of this application is a "center frequency of a downlink signal of a serving cell". Currently, broadcast information does not carry the center frequency of a downlink signal of a serving cell. For example, in an LTE system, a system information block (system information block, SIB) may include a center frequency of a downlink signal of a neighboring cell. Example SIB code is as follows:

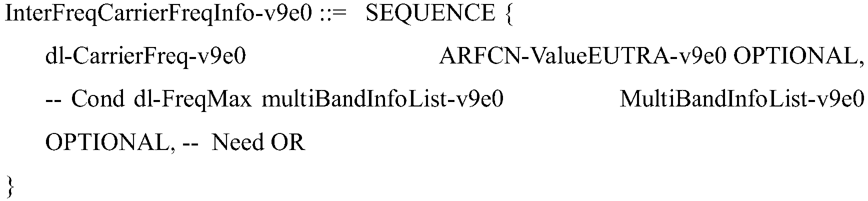

In a narrowband IoT (narrowband IoT, NB-IoT) system, a SIB may include a center frequency of an uplink signal of a serving cell. Example SIB code is as follows:

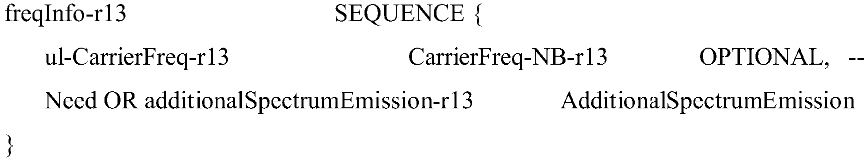

The following describes technical solutions in embodiments of this application with reference to accompanying drawings in embodiments of this application. In descriptions of this application, unless otherwise specified, "/" represents an "or" relationship between associated objects. For example, A/B may represent A or B. In this application, "and/or" describes only an association relationship for describing associated objects and represents that three relationships may exist. For example, A and/or B may represent the following three cases: Only A exists, both A and B exist, and only B exists, where A or B may be singular or plural. In addition, in the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

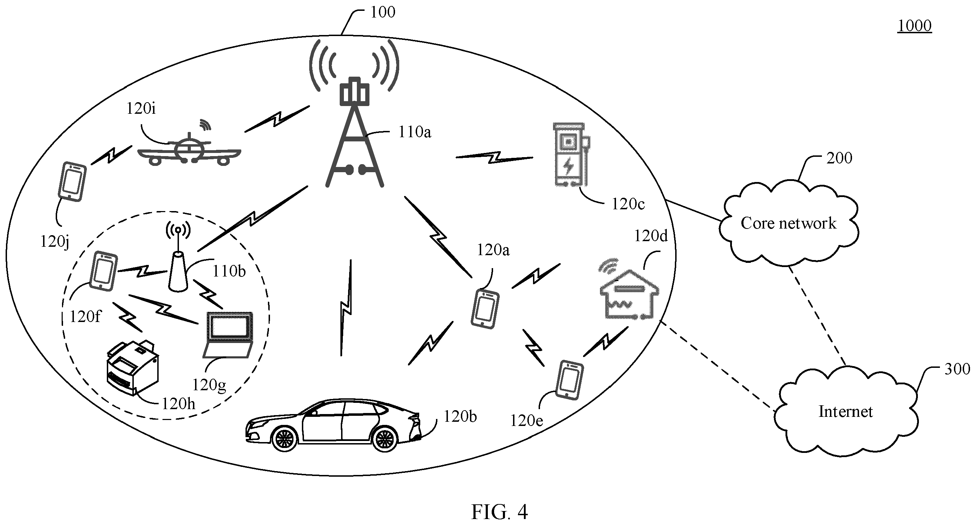

A diagram of an architecture of a mobile communication system shown in FIG. 4 is a diagram of an architecture of a communication system 1000 to which an embodiment of this application is applied. As shown in FIG. 4, the communication system includes a radio access network 100 and a core network 200. Optionally, the communication system 1000 may further include an internet 300. The radio access network 100 may include at least one radio access network device (for example, 110a and 110b in FIG. 4), and may further include at least one terminal device (for example, 120a to 120j in FIG. 4). The terminal device is connected to the radio access network device in a wireless manner, and the radio access network device is connected to the core network in a wireless or wired manner. A core network device and the radio access network device may be independent and different physical devices, or functions of a core network device and logical functions of the radio access network device may be integrated into a same physical device, or some functions of a core network device and some functions of the radio access network device may be integrated into one physical device. Terminal devices may be connected to each other in a wired or wireless manner, and radio access network devices may be connected to each other in a wired or wireless manner. FIG. 4 is only a diagram. The communication system may further include other network devices, for example, a wireless relay device and a wireless backhaul device, which are not shown in FIG. 4.

The radio access network device is an access device used by the terminal device to access the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6G mobile communication system, a base station in a future mobile communication system, an access node in a Wi-Fi system, or the like. In another possible scenario, a plurality of radio access network (radio access network, RAN) nodes collaborate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open RAN (open RAN, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module. Embodiments of this application may be implemented by the DU or the RU.

The radio access network device may be a macro base station (for example, 110a in FIG. 4), may be a micro base station or an indoor base station (for example, 110b in FIG. 4), or may be a relay node, a donor node, or the like. A specific technology and a specific device form that are used by the radio access network device are not limited in embodiments of this application. For ease of description, the following provides descriptions by using an example in which the radio access network device is a base station.

The terminal device has a capability of autonomously generating a carrier. In addition, the terminal device further has a wireless transceiver function, and may send a signal to the base station or receive a signal from the base station. The terminal device may also be referred to as a terminal, user equipment (user equipment, UE), a mobile station, a mobile terminal device, or the like. The terminal device may be widely used in various scenarios, for example, ambient IoT, device-to-device (device-to-device, D2D) communication, vehicle-to-everything (vehicle-to-everything, V2X) communication, machine-type communication (machine-type communication, MTC), virtual reality, augmented reality, industrial control, self-driving, telemedicine, a smart grid, smart furniture, a smart office, smart wearable, smart transportation, and a smart city. The terminal device may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal device are not limited in embodiments of this application.

The base station and the terminal device may be fixed or movable. The base station and the terminal device may be deployed on land, including an indoor or outdoor scenario and a handheld or vehicle-mounted scenario, or may be deployed on water, or may be deployed on an airplane, a balloon, and an artificial satellite. Application scenarios of the base station and the terminal device are not limited in embodiments of this application.

Roles of the base station and the terminal device may be relative. For example, a helicopter or an uncrewed aerial vehicle 120i in FIG. 4 may be configured as a mobile base station, and for a terminal device 120j accessing the radio access network 100 through 120i, the terminal device 120i is a base station. However, for a base station 110a, 120i is a terminal device. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal device may be collectively referred to as communication apparatuses, 110a and 110b each in FIG. 4 may be referred to as a communication apparatus with a function of the base station, and 120a to 120j each in FIG. 4 may be referred to as a communication apparatus with a function of the terminal.

Communication between a base station and a terminal device, between base stations, or between terminal devices may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal device may alternatively be performed by a module (for example, a chip or a modem) in the terminal device, or may be performed by an apparatus including the function of the terminal device.

In this application, the base station sends a downlink signal or downlink information to the terminal device, where the downlink information is carried on a downlink channel; and the terminal device sends an uplink signal or uplink information to the base station, where the uplink information is carried on an uplink channel. To communicate with the base station, the terminal device needs to establish a wireless connection to a cell controlled by the base station. The cell that establishes the wireless connection to the terminal device is referred to as a serving cell of the terminal device. When communicating with the serving cell, the terminal device is further susceptible to interference from a signal from a neighbor cell.

For example, a network device 110 provided in embodiments of this application may be 110a or 110b in FIG. 4, and a terminal device 120 provided in embodiments of this application may be any one of 120a to 120j in FIG. 4.

Optionally, a related function of the terminal device or the network device in embodiments of this application may be implemented by one device, may be jointly implemented by a plurality of devices, or may be implemented by one or more function modules in one device. This is not specifically limited in embodiments of this application. It may be understood that the foregoing function may be a network element in a hardware device, may be a software function running on dedicated hardware, a combination of hardware and software, or a virtualization function instantiated on a platform (for example, a cloud platform).

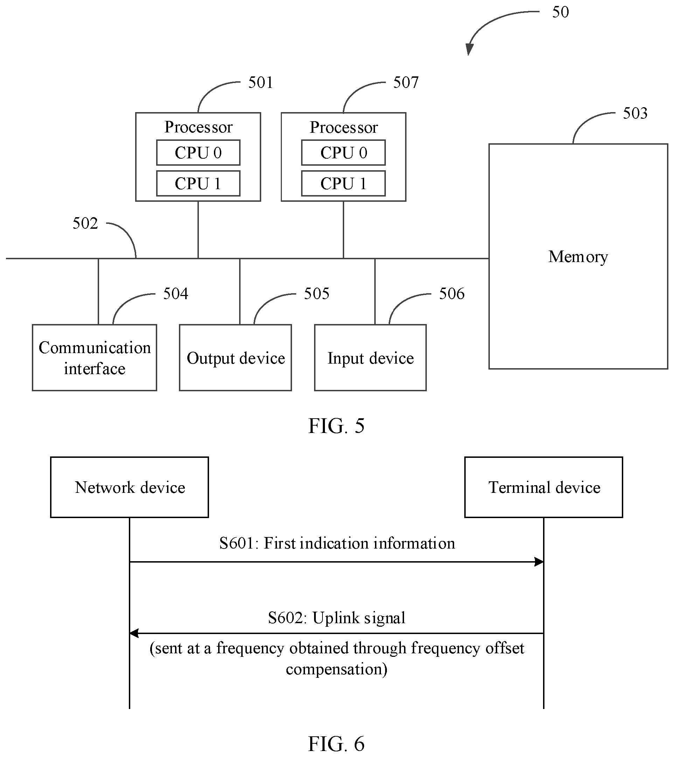

For example, the related function of the terminal device or the network device in embodiments of this application may be implemented by a communication apparatus 50 in FIG. 5.

FIG. 5 is a diagram of an architecture of a communication apparatus 50 according to an embodiment of this application. The communication apparatus 50 includes one or more processors 501, a communication line 502, and at least one communication interface (in FIG. 5, an example in which a communication interface 504 and one processor 501 are included is merely for description). Optionally, the communication apparatus 50 may further include a memory 503.

The processor 501 may be a central processing unit (central processing unit, CPU), a microprocessor, an application-specific integrated circuit (application-specific integrated circuit, ASIC), or one or more integrated circuits configured to control execution of programs in the solutions in this application.

The communication line 502 may include a path configured to connect different components.

The communication interface 504 may be a transceiver module, configured to communicate with another device or a communication network, for example, an ethernet, a RAN, or a wireless local area network (wireless local area network, WLAN). For example, the transceiver module may be an apparatus like a transceiver or a transceiver machine. Optionally, the communication interface 504 may alternatively be a transceiver circuit located in the processor 501, and is configured to implement signal input and signal output of the processor.

The memory 503 may be an apparatus with a storage function. For example, the memory 503 may be a read-only memory (read-only memory, ROM) or another type of static storage device capable of storing static information and instructions, a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM), or other compact disc storage or optical disc storage (including a compressed optical disc, a laser disc, an optical disc, a digital versatile disc, a Blu-ray optical disc, and the like), a magnetic disk storage medium or another magnetic storage device, or any other medium capable of carrying or storing expected program code in a form of instructions or data structures and capable of being accessed by a computer, but is not limited thereto. The memory may exist independently and is connected to the processor through the communication line 502. The memory may alternatively be integrated with the processor.

The memory 503 is configured to store computer-executable instructions for executing the solutions of this application, and the processor 501 controls execution. The processor 501 is configured to execute the computer-executable instructions stored in the memory 503, to implement a synchronization signal transmission method provided in embodiments of this application.

Alternatively, in embodiments of this application, the processor 501 may implement a processing-related function in the synchronization signal transmission method provided in the following embodiments of this application, and the communication interface 504 is responsible for communicating with the another device or the communication network. This is not specifically limited in embodiments of this application.

The computer-executable instructions in this embodiment of this application may also be referred to as application program code. This is not specifically limited in embodiments of this application.

During specific implementation, in an embodiment, the processor 501 may include one or more CPUs, for example, a CPU 0 and a CPU 1 in FIG. 5.

During specific implementation, in an embodiment, the communication apparatus 50 may include a plurality of processors such as the processor 501 and a processor 507 in FIG. 5. Each of the processors may be a single-CPU (single-CPU) processor, or may be a multi-CPU (multi-CPU) processor. The processor herein may be one or more devices, circuits, and/or processing cores configured to process data (for example, computer program instructions).

During specific implementation, in an embodiment, the communication apparatus 50 may further include an output device 505 and an input device 506. The output device 505 communicates with the processor 501 and may display information in a plurality of manners.

The communication apparatus 50 may be a general-purpose apparatus or a dedicated apparatus. For example, the communication apparatus 50 may be a desktop computer, a portable computer, a network server, a palmtop computer (personal digital assistant, PDA), a mobile phone, a tablet computer, a wireless terminal apparatus, a vehicle-mounted terminal apparatus, an embedded device, or a device with a structure similar to that in FIG. 5. A type of the communication apparatus 50 is not limited in embodiments of this application.

The following describes in detail the frequency offset compensation method provided in embodiments of this application with reference to FIG. 1 to FIG. 5.

FIG. 6 is a flowchart of a frequency offset compensation method according to an embodiment of this application. The method includes the following steps.

Step S601: A network device sends first indication information to a terminal device. The first indication information indicates a first frequency. The first frequency is used for frequency offset compensation of an uplink signal, and the first frequency is a center frequency of a first downlink signal. Correspondingly, the terminal device receives the first indication information from the network device.

Optionally, the first indication information is a number corresponding to the first frequency.

Optionally, the first frequency belongs to a first frequency set. The first frequency set includes N frequencies, and an absolute value of a frequency difference between adjacent frequencies among the N frequencies is a value of a channel raster. In this solution, N may be a positive integer greater than 1.

The following describes frequency numbering schemes.
(1) In Scheme 1, a frequency number may be represented by using an EARFCN, and a quantity of bits occupied by the frequency number may be a quantity of binary digits occupied by the EARFCN.

For example, a current value of the EARFCN may range from 0 to 262143. Because representing 262143 in binary requires 18 bits, the quantity of bits occupied by the frequency number may be 18. It is assumed that the first frequency is 934 MHz. In this case, an EARFCN corresponding to the first frequency may be 3540, and the number corresponding to the first frequency may be 000000110111010100.

In Scheme 1, the first frequency set may be a set including frequencies corresponding to EARFCNs 0 to 262143. In this case, a value of N may be 262144.

(2) In Scheme 2, the frequency number may be represented by using an EARFCN, and the quantity of bits occupied by the frequency number may be a quantity of binary digits occupied by an EARFCN corresponding to the highest frequency in an operating band (operating band).

For example, a typical operating band of an active tag may be a 900 MHz frequency division duplex (frequency division duplex, FDD) band. There are 151 frequencies in the band, and the corresponding EARFCNs may range from 3540 to 3690. The EARFCN corresponding to the highest frequency in the operating band is 3690, which occupies 12 binary digits. It is assumed that the first frequency is 934 MHz. In this case, the EARFCN corresponding to the first frequency may be 3540, and the number corresponding to the first frequency may be 110111010100.

Compared with Scheme 1, the number of the frequency (or the first frequency) in Scheme 2 may occupy fewer bits.

(3) In Scheme 3, frequencies in the operating band are renumbered, and the quantity of bits occupied by the frequency number may be a quantity of binary digits occupied by a number corresponding to the highest frequency in the operating band.

For example, the typical operating band of an active tag may be the 900 MHz FDD band, and there are 151 frequencies in the band. If the 151 frequencies are renumbered from 0 in ascending order, decimal numbers corresponding to the 151 frequencies may range from 0 to 150. The quantity of bits occupied by the frequency number may be a quantity of binary digits occupied by 150, that is, 8 bits. It is assumed that the first frequency is 934 MHz. In this case, the number corresponding to the first frequency may be 00000000.

If renumbering starts from 0, the number corresponding to the highest frequency in the operating band may be a quantity of frequencies in the operating band minus 1. In other words, the quantity of bits occupied by the frequency number may be a quantity of binary digits occupied by the quantity of frequencies in the operating band minus 1.

If renumbering starts from 1, the number corresponding to the highest frequency in the operating band may be the quantity of frequencies in the operating band. In other words, the quantity of bits occupied by the frequency number may be the quantity of binary digits occupied by the quantity of frequencies in the operating band.

In Scheme 2 or Scheme 3, the first frequency set may be a set including the frequencies in the operating band, or the N frequencies are located in the operating band. The value of N may be the quantity of frequencies in the operating band. In this solution, the value of N is finite and is usually a three-digit number. Therefore, compared with the solution in which an EARFCN is directly used to represent the number of the first frequency, namely, Scheme 1, the number of the first frequency in this solution may occupy fewer bits.

Compared with Scheme 1 or Scheme 2, the number of the frequency (or the first frequency) in Scheme 3 may occupy fewer bits.

(4) In Scheme 4, the first frequency set may be a set of center frequencies of the first downlink signal, which are determined by the terminal device under conditions of different frequency offset values.

The frequency offset value in this embodiment of this application may be, for example, a CFO value.

In this embodiment of this application, a maximum allowable frequency offset value may be a maximum value in an absolute value range of the frequency offset value. As described in the background, a typical CFO value may range from 100-200 ppm. When a reference carrier frequency is f_{c}, the maximum allowable frequency offset value may be f_{c}*200*10⁻⁶.

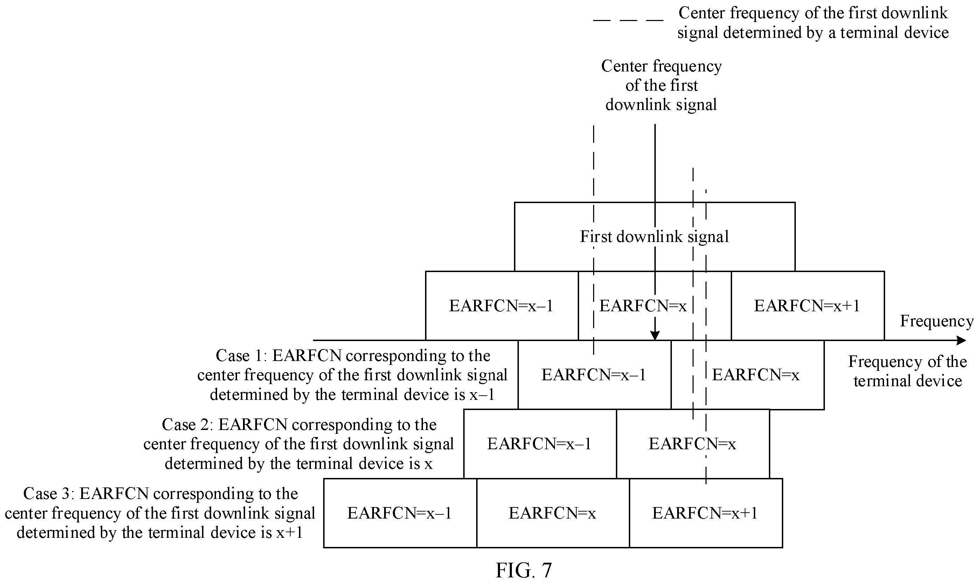

It is assumed that the maximum allowable frequency offset value is 180 kHz. For example, FIG. 7 is a diagram in which the terminal device determines an EARFCN corresponding to the center frequency of the first downlink signal when an absolute value of the frequency offset value is less than 100 kHz. It is assumed that the center frequency of the first downlink signal is a center frequency of a channel raster corresponding to EARFCN=x on a frequency axis.

A second value in this embodiment of this application may be a frequency value of a center frequency of the first downlink signal detected by the terminal device. In other words, the second value may be a value of a center frequency, located at a same position as the center frequency of the first downlink signal, on a frequency axis of the terminal device.

Case 1 is used as an example for description. After the terminal device receives the first downlink signal, because the center frequency of the first downlink signal is usually located at the center of a channel raster, the terminal device determines the center frequency of the first downlink signal as a center frequency of a channel raster that is on the frequency axis of the terminal device and that is closest to the second value. Specifically, a distance between a center frequency of a channel raster corresponding to EARFCN=x-1 and the second value is d3, a distance between a center frequency of a channel raster corresponding to EARFCN=x and the second value is d4, and d3<d4. Therefore, the EARFCN corresponding to the center frequency of the first downlink signal determined by the terminal device may be x-1.

Similarly, when the frequency offset values are different, in Case 2, the EARFCN corresponding to the center frequency of the first downlink signal determined by the terminal device may be x; and in Case 3, the EARFCN corresponding to the center frequency of the first downlink signal determined by the terminal device may be x+1.

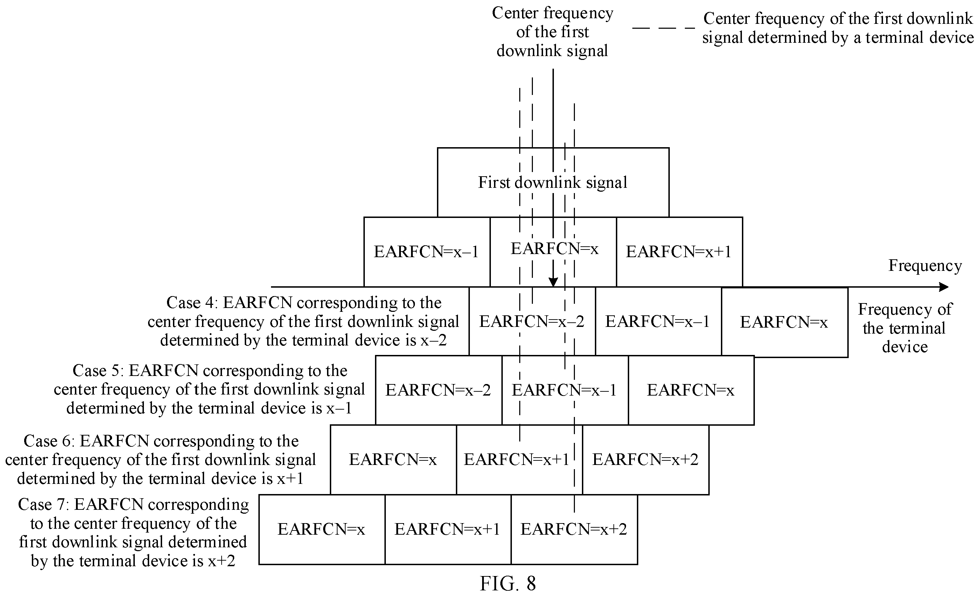

For example, FIG. 8 is a diagram in which the terminal device determines an EARFCN corresponding to the center frequency of the first downlink signal when an absolute value of the frequency offset value is greater than or equal to 100 kHz and less than or equal to 180 kHz. The terminal device may determine the center frequency of the first downlink signal by using a same method as that in Case 1 in FIG. 7. When the frequency offset values are different, in Case 4, specifically with reference to FIG. 1, the EARFCN corresponding to the center frequency of the first downlink signal determined by the terminal device may be x-2. In Case 5, the EARFCN corresponding to the center frequency of the first downlink signal determined by the terminal device may be x-1. In Case 6, the EARFCN corresponding to the center frequency of the first downlink signal determined by the terminal device may be x+1. In Case 7, the EARFCN corresponding to the center frequency of the first downlink signal determined by the terminal device may be x+2.

With reference to the cases shown in FIG. 7 and FIG. 8, the EARFCN corresponding to the center frequency of the first downlink signal determined by the terminal device may be x-2, x-1, x, x+1, or x+2, corresponding to five possibilities in total. In this case, the value of N may be 5. It is assumed that the first frequency is 934.2 MHz. In this case, the center frequency of the first downlink signal determined by the terminal device may be 934 M, 934.1 M, 934.2 M, 934.3 M, or 934.4 M. A number corresponding to 934 M may be 000; a number corresponding to 934.1 M may be 001; a number corresponding to 934.2 M may be 010; a number corresponding to 934.3 M may be 011; and a number corresponding to 934.4 M may be 100. That is, the number corresponding to the first frequency may be 010.

Optionally, N is associated with the maximum allowable frequency offset value and the value of a channel raster. In this solution, because the maximum allowable frequency offset value is finite, the value of N is also finite and small and is usually a one-digit number. Therefore, the number of the first frequency may occupy fewer bits.

Optionally, N may satisfy the following Formula (1): $N = \left\{\begin{matrix}\left⌈2y/x\right⌉ & if \left⌈2x/y\right⌉ % 2 \neq 0 \\ \left⌈2y/x\right⌉ + 1 & if \left⌈2x/y\right⌉ % 2 = 0\end{matrix}\right.$ Formula (1) y represents the maximum allowable frequency offset value, x represents the value of a channel raster, ┌ ┐ represents rounding up, and % represents a remainder operation.

With reference to the foregoing example, when x=100 kHz, and y=180 kHz, $\left⌈2x/y\right⌉ % 2 = 0$, and $N = \left⌈2y/x\right⌉ + 1 = 5$. Compared with Scheme 1, Scheme 2, or Scheme 3, the number of the frequency (or the first frequency) in Scheme 4 may occupy fewer bits.

Optionally, the frequency offset compensation method provided in this embodiment of this application further includes: The terminal device determines a first value based on the first indication information, where the first value is a frequency value corresponding to the first frequency; and the terminal device determines a frequency offset value, where the frequency offset value is used for frequency offset compensation, the frequency offset value is a difference between the first value and the second value, and the second value is the frequency value of the center frequency of the first downlink signal detected by the terminal device. In this solution, the first value may be a frequency value corresponding to the first frequency on the frequency axis of the terminal device. For example, if the first frequency is 934 M (on a frequency axis), the first value may be 934 M on the frequency axis of the terminal device. In other words, the frequency value of the first frequency and the first value are numerically the same, but are located at different positions on the frequency axis of the terminal device or on the frequency axis.

In this embodiment of this application, the second value is the frequency value of the center frequency of the first downlink signal detected by the terminal device on the frequency axis of the terminal device. The frequency value of the first frequency and the second value are located at a same position on the frequency axis of the terminal device or on the frequency axis, but are numerically different.

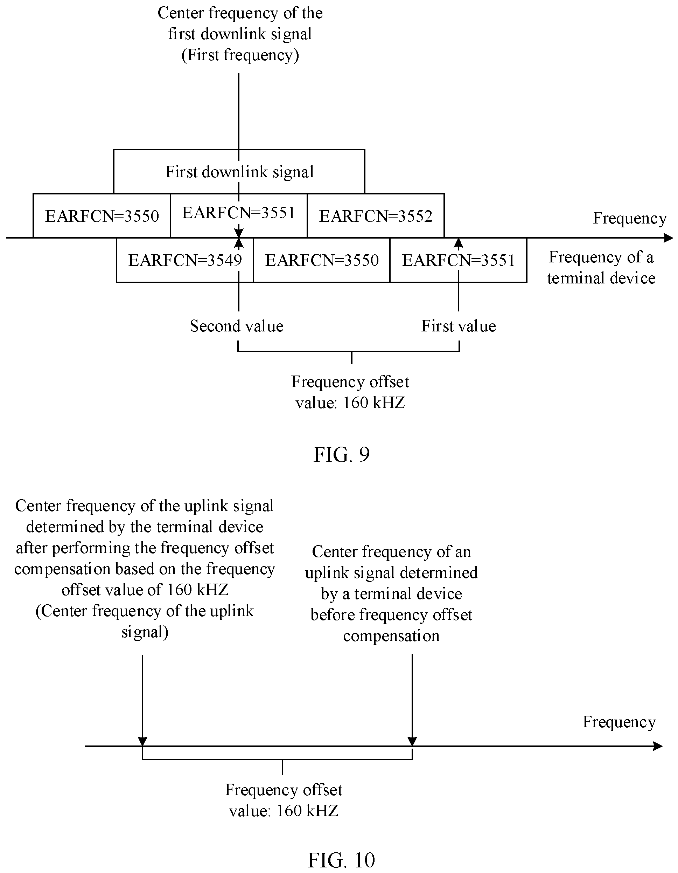

With reference to FIG. 2, FIG. 9 is a diagram in which the terminal device determines the frequency offset value according to an embodiment of this application. The first indication information may be 3551, indicating a first frequency corresponding to 3551. The first frequency is a center frequency of the first downlink signal on the frequency axis. After receiving 3551, the terminal device may determine a frequency value of a frequency corresponding to 3551 on the frequency axis of the terminal device, namely, the first value. The first value and the frequency value of the first frequency are numerically the same, both being the frequency value corresponding to 3551 specified in a protocol. Then, the terminal device may determine the difference between the first value and the second value as the frequency offset value. Specifically, the frequency offset value is 160 kHz. Clearly, in this embodiment of this application, the terminal device correctly estimates the frequency offset value.

Optionally, the first indication information is carried in broadcast information. For example, the first indication information may be carried in a master information block (master indication block, MIB) or a SIB. In this solution, similar to a cell ID, content included in the first indication information is usually consistent for terminal devices in a same cell. Therefore, the network device may deliver the first indication information in a broadcast manner. In this solution, sending of the first indication information for a plurality of times can be avoided, which helps reduce an overall transmission delay of the first indication information and alleviates network load, thereby lowering a probability of network congestion.

Certainly, the network device may alternatively deliver the first indication information in a unicast manner. For example, the network device may deliver the first indication information through a physical downlink shared channel (physical downlink shared channel, PDSCH).

The following describes how the terminal device obtains the first indication information.

Step 1: The terminal device may search for the first downlink signal through frequency scanning.

For example, the first downlink signal may be a beacon (beacon) signal. The beacon signal may include a broadcast signal, a timing synchronization signal, and a frequency offset estimation signal.

The terminal device may determine, by using a sliding window (namely, frequency scanning), a first window in which the first downlink signal is located, and detect the first downlink signal. The window may also be referred to as a sweep window. Specifically, the terminal device may slide the window in an operating band and calculate energy of a signal in the window until the energy of the signal in the first window exceeds a threshold, that is, until the terminal device can determine that the first downlink signal exists in the first window.

For example, a size of the window used by the terminal device for frequency scanning may be an integer multiple of a frequency domain resource occupied by one resource block, for example, 180 kHz.

In this embodiment of this application, after detecting the first downlink signal through frequency scanning, the terminal device may accurately determine a passband bandwidth for subsequent filtering, to reduce residual in-band interference.

Step 2: The terminal device may filter the signal in the first window.

Step 3: The terminal device may perform a sliding correlation operation on the filtered signal, to determine a starting position and an ending position corresponding to each of the broadcast signal, the timing synchronization signal, and the frequency offset estimation signal.

Step 4: The terminal device may obtain the first indication information from the broadcast signal.

Step S602: The terminal device sends an uplink signal to the network device at a frequency obtained through the frequency offset compensation. Correspondingly, the network device receives the uplink signal.

Further, with reference to FIG. 9, FIG. 10 is a diagram of impact of frequency offset compensation performed by the terminal device on the uplink signal according to an embodiment of this application. Both the uplink signal and the downlink signal have the same frequency offset value. Because the frequency offset value is 160 kHz, on the frequency axis, a difference between a frequency value of a center frequency of the uplink signal determined by the terminal device before frequency offset compensation and a frequency value of the center frequency of the uplink signal is 160 kHz. The terminal device performs the frequency offset compensation based on the frequency offset value of 160 kHz. To be specific, the terminal device shifts the frequency axis of the terminal device leftward by 160 kHz, or the terminal device subtracts 160 kHz from the frequency value of each frequency. Consequently, a center frequency of the uplink signal determined by the terminal device after performing the frequency offset compensation based on the frequency offset value of 160 kHz is the center frequency of the uplink signal. After the frequency offset compensation, the frequency axis of the terminal device completely overlaps the frequency axis, and there is no frequency offset. The terminal device sends the uplink signal at the frequency obtained through the frequency offset compensation, facilitating correct demodulation of the uplink signal.

Specifically, frequency offset compensation may be implemented by multiplying a to-be-compensated signal by a corresponding phase value. It is assumed that the to-be-compensated signal is p, the frequency offset value is q Hz, and a sampling rate of the signal is fs, where x may be represented by using a column vector having a length of L1, and L1 is a positive integer greater than 1. In this case, a compensated signal z may satisfy the following Formula (2): $z = p . ∗ \left(exp\left(1j∗2∗π∗q∗a∗\frac{1}{fs}\right)\right)$ Formula (2)

The symbol ".*" represents a Hadamard product (Hadamard product) operation, a may be a column vector having a length of L2, and L2 is a positive integer greater than 1. For example, a=[1, 2, ..., L2]. For example, the to-be-compensated signal may be a to-be-compensated uplink signal, and the compensated signal may be a compensated uplink signal.

In the frequency offset compensation method according to this embodiment of this application, the terminal device may obtain the center frequency of the first downlink signal, and perform frequency offset compensation based on the center frequency of the first downlink signal. This can avoid an error caused by the terminal device independently determining the center frequency of the first downlink signal, thereby improving accuracy of frequency offset compensation performed by the terminal device.

It may be understood that, in the foregoing embodiments, the methods and/or the steps implemented by the network device may alternatively be implemented by a component (for example, a chip or a circuit) that may be used in the network device or an apparatus including the network device; and the methods and/or the steps implemented by the terminal device may alternatively be implemented by a component (for example, a chip or a circuit) that may be used in the terminal device or an apparatus including the terminal device.

It may be understood that, to implement the foregoing functions, the network device or the terminal device includes corresponding hardware structures and/or software modules for implementing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the network device or the terminal device is divided into functional modules based on the foregoing method embodiments. For example, each functional module may be divided to each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

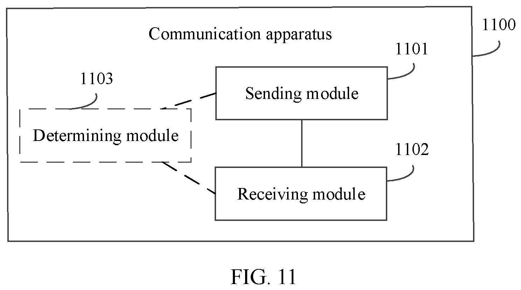

For example, the terminal device in this embodiment of this application may be implemented in a form of the communication apparatus 1100 shown in FIG. 11. The communication apparatus 1100 may include a sending module 1101 and a receiving module 1102. Optionally, the communication apparatus 1100 may further include a determining module 1103. The communication apparatus 1100 is configured to implement the functions of the terminal device in the foregoing method embodiments shown in FIG. 6 to FIG. 10.

For example, when the communication apparatus 1100 is configured to implement the functions of the terminal device in the method embodiment shown in FIG. 6, the receiving module 1102 is configured to receive the first indication information, and the sending module 1101 is configured to send the uplink signal at the frequency obtained through the frequency offset compensation.

For more detailed descriptions of the sending module 1101, the receiving module 1102, and the determining module 1103, refer to related descriptions in the method embodiments shown in FIG. 6 to FIG. 10.

For another example, the network device in this embodiment of this application may also be implemented in a form of the communication apparatus 1100 shown in FIG. 11. The communication apparatus 1100 is configured to implement the functions of the network device in the method embodiment shown in FIG. 6.

For example, when the communication apparatus 1100 is configured to implement the functions of the network device in the method embodiment shown in FIG. 6, the sending module 1101 is configured to send the first indication information, and the receiving module 1102 is configured to receive the uplink signal.

For more detailed descriptions of the sending module 1101 and the receiving module 1102, refer to related descriptions in the method embodiment shown in FIG. 6.

In this embodiment, the communication apparatus 1100 is presented in a form of functional modules obtained through division in an integrated manner. The "module" herein may be an ASIC, a circuit, a processor that executes one or more software or firmware programs, a memory, an integrated logic circuit, and/or another component capable of providing the foregoing functions.

In a simple embodiment, a person skilled in the art may figure out that the communication apparatus 1100 may be in a form of the communication apparatus 50 shown in FIG. 5.

For example, the processor 501 and/or the processor 507 in the communication apparatus 50 shown in FIG. 5 may invoke the computer-executable instructions stored in the memory 503, to enable the communication apparatus 50 to perform the frequency offset compensation method in the foregoing method embodiment. Specifically, some functions/implementation processes of the sending module 1101 and the receiving module 1102 in FIG. 11 may be implemented by using a communication module connected to the communication interface 504 in FIG. 5. Some functions/implementation processes of the determining module 1103 in FIG. 11 may be implemented by the processor 501 and/or the processor 507 in the communication apparatus 50 shown in FIG. 5 by invoking the computer-executable instructions stored in the memory 503.

Because the communication apparatus 1100 provided in this embodiment may perform the frequency offset compensation method, for technical effect that can be achieved by the communication apparatus, refer to the foregoing method embodiments. Details are not described herein again.

It should be noted that one or more of the foregoing modules or units may be implemented by using software, hardware, or a combination thereof. When any one of the foregoing modules or units is implemented by using software, the software exists in a form of computer program instructions, and is stored in the memory. The processor may be configured to execute the program instructions and implement the foregoing method procedure. The processor may be built into a SoC (system-on-a-chip) or an ASIC, or may be an independent semiconductor chip. In addition to a core configured to execute the software instructions to perform an operation or processing, the processor may further include a necessary hardware accelerator, such as a field programmable gate array (field programmable gate array, FPGA), a programmable logic device (programmable logic device, PLD), or a logic circuit that implements a special logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including at least one processor and an interface. The at least one processor is coupled to a memory through an interface, and when the at least one processor executes a computer program or instructions in the memory, the method in any one of the foregoing method embodiments is performed. In a possible implementation, the communication apparatus further includes the memory. Optionally, the chip system may include a chip, or may include a chip and another discrete device. This is not specifically limited in embodiments of this application.

All or some of the foregoing embodiments may be implemented by using software, hardware, firmware, or any combination thereof. When a software program is used for implementation, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not indicate that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A frequency offset compensation method, applied to a terminal device, and comprising:
receiving first indication information, wherein the first indication information indicates a first frequency, the first frequency is used for frequency offset compensation of an uplink signal, and the first frequency is a center frequency of a first downlink signal; and
sending the uplink signal at a frequency obtained through the frequency offset compensation.

2. The method according to claim 1, wherein the method further comprises:
determining a first value based on the first indication information, wherein the first value is a frequency value corresponding to the first frequency; and
determining a frequency offset value, wherein the frequency offset value is used for the frequency offset compensation, the frequency offset value is a difference between the first value and a second value, and the second value is a frequency value of a center frequency of the first downlink signal detected by the terminal device.

3. The method according to claim 1 or 2, wherein the first frequency belongs to a first frequency set, the first frequency set comprises N frequencies, and an absolute value of a frequency difference between adjacent frequencies among the N frequencies is a value of a channel raster.

4. The method according to claim 3, wherein N is associated with a maximum allowable frequency offset value and the value of a channel raster.

5. The method according to claim 3 or 4, wherein N satisfies the following relationship: $N = \left\{\begin{matrix}\left⌈2y/x\right⌉ & if \left⌈2x/y\right⌉ % 2 \neq 0 \\ \left⌈2y/x\right⌉ + 1 & if \left⌈2x/y\right⌉ % 2 = 0\end{matrix}\right. ,$ wherein
y represents the maximum allowable frequency offset value, x represents the value of a channel raster, ┌ ┐ represents rounding up, and % represents a remainder operation.

6. The method according to any one of claims 3 to 5, wherein a value of N is 5.

7. The method according to claim 3, wherein the N frequencies are located in an operating band.

8. The method according to any one of claims 1 to 7, wherein the first indication information is carried in broadcast information.

9. A frequency offset compensation method, applied to a network device, and comprising:
sending first indication information, wherein the first indication information indicates a first frequency, the first frequency is used for frequency offset compensation of an uplink signal, and the first frequency is a center frequency of a first downlink signal; and
receiving the uplink signal, wherein the uplink signal is sent at a frequency obtained through the frequency offset compensation.

10. The method according to claim 9, wherein the first frequency belongs to a first frequency set, the first frequency set comprises N frequencies, and an absolute value of a frequency difference between adjacent frequencies among the N frequencies is a value of a channel raster.

11. The method according to claim 10, wherein N is associated with a maximum allowable frequency offset value and the value of a channel raster.

12. The method according to claim 10 or 11, wherein N satisfies the following relationship: $N = \left\{\begin{matrix}\left⌈2y/x\right⌉ & if \left⌈2x/y\right⌉ % 2 \neq 0 \\ \left⌈2y/x\right⌉ + 1 & if \left⌈2x/y\right⌉ % 2 = 0\end{matrix}\right. ,$ wherein
y represents the maximum allowable frequency offset value, x represents the value of a channel raster, ┌ ┐ represents rounding up, and % represents a remainder operation.

13. The method according to any one of claims 10 to 12, wherein a value of N is 5.

14. The method according to claim 10, wherein the N frequencies are located in an operating band.

15. The method according to any one of claims 9 to 14, wherein the first indication information is carried in broadcast information.

16. A communication apparatus, wherein the communication apparatus comprises a receiving module and a sending module;
the receiving module is configured to receive first indication information, the first indication information indicates a first frequency, the first frequency is used for frequency offset compensation of an uplink signal, and the first frequency is a center frequency of a first downlink signal; and
the sending module is configured to send the uplink signal at a frequency obtained through the frequency offset compensation.

17. A communication apparatus, wherein the communication apparatus comprises a sending module and a receiving module;
the sending module is configured to send first indication information, the first indication information indicates a first frequency, the frequency is used for frequency offset compensation of an uplink signal, and the first frequency is a center frequency of a first downlink signal; and
the receiving module is configured to receive the uplink signal, wherein the uplink signal is sent at a frequency obtained through the frequency offset compensation.

18. The communication apparatus according to claim 17, wherein the communication apparatus further comprises a determining module;
the determining module is configured to determine a first value based on the first indication information, wherein the first value is a frequency value corresponding to the first frequency; and
the determining module is further configured to determine a frequency offset value, wherein the frequency offset value is used for the frequency offset compensation, the frequency offset value is a difference between the first value and a second value, and the second value is a frequency value of a center frequency of the first downlink signal detected by the communication apparatus.

19. The communication apparatus according to claim 17 or 18, wherein the first frequency belongs to a first frequency set, the first frequency set comprises N frequencies, and an absolute value of a frequency difference between adjacent frequencies among the N frequencies is a value of a channel raster.

20. The communication apparatus according to claim 19, wherein N is associated with a maximum allowable frequency offset value and the value of a channel raster.

21. The communication apparatus according to claim 19 or 20, wherein N satisfies the following relationship: $N = \left\{\begin{matrix}\left⌈2y/x\right⌉ & if \left⌈2x/y\right⌉ % 2 \neq 0 \\ \left⌈2y/x\right⌉ + 1 & if \left⌈2x/y\right⌉ % 2 = 0\end{matrix}\right. ,$ wherein
y represents the maximum allowable frequency offset value, x represents the value of a channel raster, ┌ ┐ represents rounding up, and % represents a remainder operation.

22. The communication apparatus according to any one of claims 19 to 21, wherein a value of N is 5.

23. The communication apparatus according to claim 19, wherein the N frequencies are located in an operating band.

24. The communication apparatus according to any one of claims 16 to 23, wherein the first indication information is carried in broadcast information.

25. A communication apparatus, comprising a memory and a processor coupled to the memory, wherein the memory is configured to store a program, and the processor is configured to execute the program stored in the memory; and when the communication apparatus runs, the processor runs the program to enable the communication apparatus to perform the method according to any one of claims 1 to 8 or enable communication apparatus to perform the method according to any one of claims 9 to 15.

26. A communication system, wherein the communication system comprises a terminal device and a network device, the terminal device is configured to perform the method according to any one of claims 1 to 8, or the network device is configured to perform the method according to any one of claims 9 to 15.

27. A computer-readable storage medium, wherein the computer-readable storage medium stores a computer program, and when the computer program is executed by a computer, the computer is enabled to perform the method according to any one of claims 1 to 8; or when the computer program is executed by a computer, the computer is enabled to perform the method according to any one of claims 9 to 15.

28. A computer program product, comprising a computer program or instructions, wherein when the computer program or the instructions are executed by a processor, the method according to any one of claims 1 to 8 is implemented; or when the computer program or the instructions are executed by a processor, the method according to any one of claims 9 to 15 is implemented.

29. A chip, wherein the chip comprises a processor and a memory, the memory is configured to store instructions, and the processor is configured to run the instructions, to enable an apparatus comprising the chip to perform the method according to any one of claims 1 to 8; or the processor is configured to run the instructions, to enable an apparatus comprising the chip to perform the method according to any one of claims 9 to 15.
